# EUROPÄISCHE PATENTSCHRIFT

(11) **EP 0 728 762 B1**
(45) Veröffentlichungstag und Bekanntmachung des Hinweises auf die Patenterteilung: **24.05.2000**
(21) Anmeldenummer: 96102415.5
(22) Anmeldetag: 17.02.1996
(51) Int. Cl.: C07F 9/50

(54) **Sulfonierte Diphosphane und ein Verfahren zu ihrer Herstellung**
Sulfonated disphosphanes and a process for their preparation
Diphosphanes sulfonés et procédé pour leur préparation

(30) Priorität: 23.02.1995 DE 19506279
(43) Veröffentlichungstag der Anmeldung: 28.08.1996
(73) Patentinhaber: Celanese Chemicals Europe GmbH, 60439 Frankfurt am Main (DE)
(72) Erfinder: Naumann, Christopher, Dr., D-65527 Niedernhausen (DE); Tafesh, Ahmed, Dr., D-65779 Kelkheim (DE); Regnat, Dieter, Dr., D-65817 Eppstein (DE); Kleiner, Hans-Jerg, Dr., D-61476 Kronberg (DE)

(56) Entgegenhaltungen:
- EP-A- 0 491 240
- EP-A- 0 571 819
- WO-A-93/15089

## Beschreibung

Die vorliegende Erfindung betrifft neue Verbindungen aus der Reihe sulfonierter Diphosphane und ein Verfahren zu ihrer Herstellung.

Phosphane haben generell eine vielseitige, technische Anwendung gefunden. Sie eignen sich beispielsweise als Antioxidantien, Metallextraktionsmittel, Flammschutzimprägniermittel, Stabilisierungsmittel für Olefine (US-6-400,168 NTIS); Chem. Abstr. 100; 122286b) und Trioxan (US 4,125,540) Ausgangsverbindungen für Wittig-Reagenzien oder Liganden für Metallkomplexkatalysatoren. Aufgrund ihrer Formenvielfalt stellen sie auch Vorprodukte zur Herstellung weiterer, gegebenenfalls Phosphor enthaltender, organischer Verbindungen dar.

Innerhalb der Gruppe der Phosphane spielen sulfonierte Diphosphane aufgrund ihrer stofflichen Eigenschaften eine herausgehobene Rolle. Da in ihrem Molekül 2 trivalente Phosphoratome enthalten sind, besitzen sie gegenüber zahlreichen Metallen und Metallionen, insbesondere solchen aus der Reihe der Übergangsmetalle, komplexierende Eigenschaften. Die Fähigkeit der Komplexbildung ist auf die Bildung vergleichsweise stabiler Chelate zurückzuführen und kann zur Herstellung entsprechender Metallkomplexkatalysatoren, die in technischen Prozessen Anwendung finden, genutzt werden.

Die EP 0 571 819 A betrifft sulfonierte 2,2'-Bis-(diphenylphosphinomethyl)-1,1'-binaphthaline der allgemeinen Formel (A) 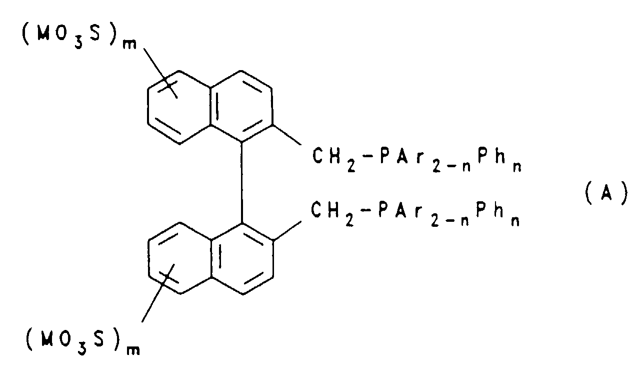 in der Ar für m-C₆H₄SO₃M, M für Wasserstoff, für Ammonium, für ein einwertiges Metall oder das Äquivalent eines mehrwertigen Metalls, Ph für einen Phenylrest steht, m den Wert 1 oder 2 hat und n 0, 1 oder 2 bedeutet. Diese sulfonierten Diphosphane werden in Kombination mit Rhodium als Hydroformylierungskatalysatoren eingesetzt. Aufgrund ihrer Wasserlöslichkeit, die auf den Einbau der Sulfonsäure- oder Sulfonat-Gruppen zurückzuführen ist, eröffnen diese Diphosphane die Möglichkeit, die Hydroformylierung in heterogener Phase durchzuführen. Diese Verfahrensvariante ist besonders zweckmäßig, weil sie einen Weg eröffnet den in Wasser gelösten Katalysator einfach und schonend von dem in Wasser nicht löslichen Reaktionsprodukt abzutrennnen.

Weitere sulfonierte Diphosphane werden in der EP-A-0 491 240 beschrieben.

In Anbetracht der besonderen Bedeutung, die Verbindungen aus der Reihe der sulfonierten Diphosphane zukommt, stellt es eine lohnende Aufgabe dar, neue Verbindungen aus dieser Gruppe bereitzustellen, um das Spektrum ihrer Anwendungsmöglichkeiten nicht nur zu ergänzen, sondern auch durch eine Nuancierung stofflicher Eigenschaften und Variation struktureller Merkmale zu bereichern und zu erweitern. Es ist nämlich anzunehmen, daß die chemische Eigenart und der strukturelle Aufbau der sulfonierten Diphosphane einen Einfluß auf Prozesse ausübt, in denen diese sulfonierten Diphosphane als Katalysatorbestandteil verwendet werden. Insbesondere stellt es eine interessante Herausforderung dar, die besonderen Eigenschaften symmetrisch substituierter, sulfonierter Diphosphane mit den vorteilhaften Einflüssen, die auf eine unsymmetrische Substitution und damit auf sterische und/oder elektronische Effekte oder eine zusätzlich entstandene Chiralität zurückgehen, so zu vereinen daß man zu neuen unsymmetrischen sulfonierten Diphosphanen gelangt, die einen noch größeren oder andersgearteten Anwendungsbereich als die symmetrisch substituierten, sulfonierten Diphosphane umfassen.

Gelöst wird diese Aufgabe durch sulfonierte Diphosphane der allgemeinen Formel (I) 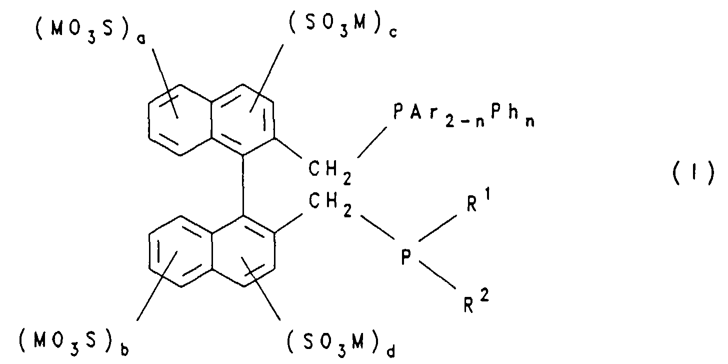 worin M für Wasserstoff, für Ammonium, ein einwertiges Metall oder das Äqivalent eines mehrwertigen Metalls steht, a, b, c und d jeweils 0 oder 1 ist, mit der Maßgabe, daß a + b + c + d einer ganzen Zahl von 1 bis 4 entspricht, Ar für einen m-(MSO₃)-C₆H₄-Rest steht und M die vorstehende Bedeutung hat, n für 0, 1 oder 2, Ph für einen Phenylrest steht, R¹ und R² gleich oder verschieden sind und für einen Alkylrest mit 1 bis 10 Kohlenstoffatomen oder einen cycloaliphatischen Rest mit 5 bis 10 Kohlenstoffatomen im Ring stehen.

Die sulfonierten Diphosphane der allgemeinen Formel (I) stellen aufgrund ihres chemischen Verhaltens, das auch auf den Einbau zweier trivalenter P-Atome in das Molekül zurückzuführen sein dürfte, und wegen ihrer besonderen Struktur interessante Verbindungen dar. Die besondere Struktur der Diphosphane geht zum einen auf den 2,2'-Dimethyl-1,1'-binaphthylrest und zum anderen auf die beiden unterschiedlich substituierten Phosphoratome zurück. Die beiden unterschiedlich substituierten Phosphoratome führen dazu, daß die Diphosphane der Formel (I) unsymmetrisch substituierte Verbindungen darstellen. Bei den sulfonierten Diphosphanen der Formel (I) handelt es sich um sulfonierte 2-(Diphenylphosphinomethyl)-2'-(dialkylphosphinomethyl)-1,1'-binaphthaline bzw. um sulfonierte 2-(Diphenylphosphinomethyl)-2'-(dicycloalkylphosphinomethyl)-1,1'-binaphthaline oder um sulfonierte 2-(Diphenylphosphinomethyl)-2'-(alkyl-cycloalkylphosphino)-1,1'-binaphthaline.

Aufgrund ihrer Sulfonsäure- oder Sulfonat-Gruppen stellen sie wasserlösliche Verbindungen dar und eignen sich somit, eine Umsetzung in heterogener Phase durchzuführen, wobei diese Verfahrensvariante besonders zweckmäßig ist, da sie einen Weg eröffnet, einen in Wasser gelösten Katalysator einfach und schonend von den in Wasser nicht-löslichen Reaktionsprodukten abzutrennen.

Die sulfonierten Diphosphane enthalten je nach Sulfonierungsgrad bis zu 6 Sulfonsäure- bzw. Sulfonat-Gruppen. Ihre Löslichkeit in Wasser steigt mit dem Sulfonierungsgrad an.

Die Erfindung betrifft sulfonierte Diphosphane der Formel (I), worin M für Wasserstoff oder ein Alkalimetallion, insbesondere für Wasserstoff, Na⁺ oder K⁺ bevorzugt für Na⁺ steht.

In Abhängigkeit von dem Sulfonierungsgrad entspricht a + b + c + d insbesondere einer ganzen Zahl von 2 bis 4.

n kann für 0 oder 1 stehen, aber auch 2 bedeuten.
Die Reste R¹ und R² sind gleich oder verschieden und stehen für einen Alkylrest mit 1 bis 6, insbesondere 1 bis 4 Kohlenstoffatomen oder einen cycloaliphatischen Rest mit 5 bis 6, insbesondere 6 Kohlenstoffatomen im Ring.

Von besonderem Interesse sind die sulfonierten Diphosphane in denen R¹ und R² gleich sind, da sie üblicherweise leichter zugänglich sind als die sulfonierten Diphosphane in denen R¹ und R² verschieden voneinander sind. Hierzu zählen insbesondere die sulfonierten Diphosphane, in denen R¹ und R² jeweils für einen Cyclohexylrest stehen.

Die vorliegende Erfindung betrifft ferner ein Verfahren zur Herstellung der sulfonierten Diphosphane der allgemeinen Formel (I). Es ist dadurch gekennzeichnet, daß man ein Diphosphan der allgemeinen Formel (II) 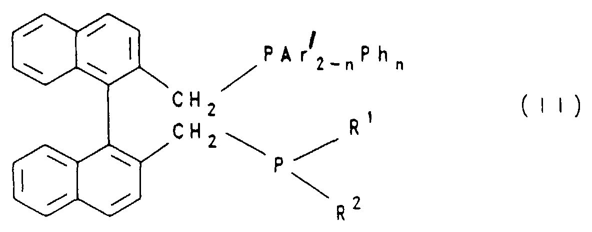 worin n, Ph, R¹ und R² die in der allgemeinen Formel (I) voranstehend genannten Bedeutung haben und Ar' ein C₆H₅-Rest ist, bei Temperaturen von 0 bis 25°C mit Oleum sulfoniert, das Sulfonierungsgemisch hydrolysiert und aus dem sulfonierten Hydrolysierungsgemisch die sulfonierten Diphosphane der allgemeinen Formel (I) isoliert.

Von besonderer Bedeutung sind die Diphosphane der Formel (II), worin n = 2 ist. Zur Herstellung dieser Diphosphane geht man von einem 2-(Diphenylphosphinomethyl)-2'-(dialkylphosphinomethyl)-1,1'-binaphthalin bzw. von einem 2-(Diphenylphosphinomethyl)-2'-(dicycloalkylphosphinomethyl)-1,1'-binaphthalin als Grundkörper aus. Diese Verbindungen erhält man über eine mehrstufige Synthese durch reduktive Dimerisierung von 1-Brom-2-methylnaphthalin, Umsetzung des daraus gebildeten Binaphthalins mit N-Bromsuccinimid, wobei 2,2'-Bis-(brommethyl)-1,1'-binaphthalin entsteht. Die Umsetzung dieser Dibromverbindung beispielsweise mit einem Dialkylphosphan oder mit einem Cyclohexylphosphan liefert die entsprechenden Phosphepiniumbromide. Derartige Phosphepiniumbromide und deren Herstellung ist Gegenstand einer nicht vorveröffentlichten deutschen Patentanmeldung (Aktenzeichen P 44 19 990.2).

Die Phosphepiniumbromide lassen sich mittels Kaliumdiphenylphosphid im Sinne einer nukleophilen Ringöffnung zu den entsprechenden 2-(Diphenylphosphinomethyl)-2'-(dialkylphosphinomethyl)-1,1'-binaphthalinen bzw. 2-(Diphenylphosphinomethyl)-2'-(dicycloalkylphosphinomethyl)-1,1'-binaphthalinen umsetzen. Derartige Diphosphane der Formel (II) und deren Herstellung sind Gegenstand einer nicht vorveröffentlichten deutschen Patentanmeldung (Aktenzeichen P 44 34 844.4).

Zur Einführung der Sulfonsäuregruppen in den Binaphthylrest und in die Phenylreste behandelt man das Diphosphan der Formel (II) mit überschüssigem Schwefeltrioxid in Form von Oleum als Sulfonierungsmittel. Als Lösungsmittel für das zu sulfonierende Diphosphan hat sich konzentrierte Schwefelsäure bewährt. Die aus dem Diphosphan und Schwefelsäure bestehende Lösung kann anteilsweise in Oleum eingetragen oder anteilsweise mit Oleum versetzt werden. Es empfiehlt sich das Reaktionsgemisch intensiv zu rühren, gut zu kühlen und die Reaktanden langsam und in kleinen Anteilen zusammenzuführen, so daß die Reaktionswärme ohne Mühe abgeführt werden kann. Dadurch erreicht man, daß die Sulfonierung nicht unkontrolliert abläuft, sondern in den Binaphthylrest und die Phenylreste nacheinander SO₃H-Gruppen eintreten. Überdies wird eine Oxidation des Phosphors wirksam unterbunden. Nach Zusatz des gesamten Sulfonierungsmittels bzw. Diphosphans kann die Nachreaktion bei Raumtemperatur, d.h. bei etwa 20 bis 25°C und im wesentlichen ohne äußere Kühlung erfolgen. Es ist jedoch zweckmäßig, das Reaktionsgemisch auch in diesem Stadium zu rühren, um gegebenenfalls noch auftretende Reaktionswärme gleichmäßig zu verteilen und ohne Verzögerung abführen zu können.

Maßgebend für den erzielbaren Sulfonierungsgrad sind insbesondere die SO₃-Konzentration im Oleum, die Reaktionstemperatur und die Reaktionszeit. Die genannten Parameter beeinflussen sich gegenseitig.

Es hat sich bewährt, Oleum einzusetzen, das 10 bis 65 aber auch mehr Gew.-%, insbesondere 40 bis 65 Gew.-% freies Schwefeltrioxid enthält.

Die Reaktionstemperatur beträgt, wie eingangs bereits erwähnt, 0 bis 25°C, insbesondere 0 bis 20°C, bevorzugt 0 bis 10°C.

Das Sulfonierungsmittel ist, bezogen auf das Diphosphan der Formel (I), im Überschuß anzuwenden. Zweckmäßigerweise setzt man je Mol Diphosphan der Formel (II) 25 bis 80, insbesondere 40 bis 70 Mol Schwefeltrioxid ein. Oleum mit freiem SO₃ in hoher Konzentration, d.h. mit einem Anteil von etwa 40 bis 65 und mehr Gew.-% Schwefeltrioxid führt zu Produkten, die mindestens 4 SO₃H-Gruppen enthalten und demzufolge in Wasser sehr gut löslich sind. Konzentrationen von freiem SO₃ in Oleum, die niedriger als etwa 40 Gew.-% sind, ergeben Produkte mit einem geringeren Sulfonierungsgrad, d.h. es bilden sich Diphosphane, die in Wasser eine niedrigere Löslichkeit aufweisen.

Grundsätzlich können auch höhere SO₃-Konzentrationen angewendet werden, sie begünstigen jedoch im allgemeinen die Oxidation der Diphosphane zu Phosphanoxiden wesentlich stärker als die Sulfonierung, daß ingesamt die Ausbeute an sulfonierten Diphosphanen abnimmt. Daher empfiehlt es sich auch nicht, niedrige Konzentrationen an freiem SO₃ durch Erhöhung der Reaktionstemperatur zu kompensieren.

Dagegen gelingt es, den Sulfonierungsgrad des Diphosphans durch die Reaktionszeit zu beinflussen. Längere Reaktionszeiten führen zu höher sulfonierten Verbindungen als kürzere Reaktionszeiten. Im allgemeinen erfordert die Umsetzung in den genannten Temperaturbereichen 10 bis 60, insbesondere 15 bis 48 Stunden. Diese Reaktionszeit gilt insbesondere bei Anwendung von Oleum, das etwa 40 und mehr Gew.-% freies Schwefeltrioxid enthält. Niedriger konzentriertes Oleum führt auch bei langen Reaktionszeiten nur zu partiell sulfonierten Verbindungen, wobei sich die zunehmende Bildung von Oxidationsprodukten nicht völlig vermeiden läßt.

Zweckmäßigerweise führt man daher die Sulfonierung mit höher konzentriertem Oleum durch und steuert den Sulfonierungsgrad über die Reaktionszeit.

Im Anschluß an die Sulfonierung wird das Reaktionsgemisch hydrolysiert. Bei diesem Verfahrensschritt ist darauf zu achten, daß eine Temperatur von etwa 30°C nicht überschritten wird. Es ist vorteilhaft, die Hydrolyse bei einer Temperatur von 0 bis 25, insbesondere von 15 bis 25°C durchzuführen. Es empfiehlt sich daher, das Umsetzungsgemisch vorsichtig auf Eis zu geben oder die Hydrolyse mit Eiswasser durchzuführen und für intensive Außenkühlung zu sorgen.

Die verdünnte, im wesentlichen die unterschiedlichen Sulfonierungstufen des Diphosphans der Formel (I) und Schwefelsäure enthaltende Lösung wird in weiteren Verfahrensschritten aufgearbeitet.

Hierzu neutralisiert man die schwefelsaure Lösung, also das hydrolysierte Sulfonierungsgemisch mit einem alkalischen Reagenz wie einem Alkalicarbonat, Alkalihydroxid, trennt Alkalisulfat ab, engt die Lösung ein und extrahiert die sulfonierten Diphosphane der Formel (I) aus dem Rückstand mit einem Gemisch aus Alkoholen mit bis zu 5 Kohlenstoffatomen und Wasser.

Um das Volumen des Reaktionsgemisches nicht unnötig zu vergrößern und das sich bildende Alkalisulfat weitgehend abzuscheiden, wendet man das Neutralisationsmittel als hochkonzentrierte Lösung oder in ungelöster fester Form an, beispielsweise Ätznatron-Schuppen, Ätznatron-Granalien.

Die Hauptmenge des Alkalisulfats kann man aus der Lösung aufgrund seiner geringeren Löslichkeit bei niedrigeren Temperaturen durch Abkühlen entfernen. Die hierfür geeigneten Temperaturen hängen von der Konzentration des Sulfats in der Lösung und dem Temperaturverlauf seiner Löslichkeit ab. Die günstigsten Bedingungen sind daher von Fall zu Fall durch Versuche zu bestimmen. Die Sulfatabtrennung kann in einer oder auch mehreren Stufen erfolgen. Es hat sich als zweckmäßig erwiesen, die Kristallisation in zwei Stufen vorzunehmen.

Nach der Abscheidung des Alkalisulfats engt man die Lösung vorzugsweise unter Vakuum zur Trockne ein und extrahiert aus dem Kristallbrei Diphosphane unterschiedlicher Sulfonierungsgrade in Form der Alkalisalze. Geeignete Extraktionsmittel sind z.B. Gemische aus niederen Alkoholen, d.h. Alkoholen mit bis zu 5 Kohlenstoffatomen im Molekül, wie Methanol, Ethanol, Propanol, mit Wasser. Man führt die Extraktion nach üblichen Verfahren in einer oder mehreren Stufen, insbesondere 2 bis 4 Stufen durch. Die Extrakte werden vereinigt und zur Trockne eingeengt.

Ebenso hat es sich bewährt, die schwefelsaure Lösung, also das hydrolysierte Sulfonierungsgemisch, mit einer Mischung aus einem in Wasser unlöslichen Amin und einem organischen Lösungsmittel umzusetzen und die Sulfonate als Aminsalze zu extrahieren. Gemeint sind Amine mit 10 bis 60, insbesondere 13 bis 36 Kohlenstoffatomen, beispielsweise Methyldioktylamin, Tri-n-oktylamin, Tri-isooktylamin, Tri-2-ethylhexylamin, Tridodecylamin, insbesondere Trioktylamin. Als organisches Lösungsmittel werden mit Erfolg aliphatische und aromatische Kohlenwasserstoffe oder Kohlenwasserstoffgemische, beispielsweise Toluol oder Kerosin-ähnliche Gemische, insbesondere Toluol verwendet.

Je Äquivalent Sulfonsäure setzt man 0,5 bis 1,5, insbesondere 0,8 bis 1,2 Mol Amin ein. Nach intensivem Mischen der schwefelsauren Lösung und der Lösung des Amins werden wäßrige und organische Phase voneinander getrennt. Die organische Phase, die die Aminsalze der sulfonierten Diphosphane enthält, wird mit der Lösung einer Base in Wasser zur Reaktion gebracht. Beispiele für besonders geeignete Basen sind Natriumhydroxid und Kaliumhydroxid. Man erhält auf diese Weise eine wäßrige Lösung, aus der das entsprechende Alkalisalz der Sulfonsäuren isoliert werden kann. Eine interessante Verfahrensvariante besteht darin, die in Wasser gelöste Base nicht auf einmal der Lösung des Aminsalzes im organischen Medium zuzusetzen, sondern sie in Anteilen zuzugeben.

Eine solche abgestufte Behandlung der Aminlösung beispielsweise durch Einstellen bestimmter pH-Werte oder pH-Wertbereiche mit Hilfe der Base ermöglicht eine weitgehende Abtrennung von Phosphanoxiden aus dem Sulfonierungsgemisch und zugleich die partielle Zerlegung des Sulfonierungsgemisches in Produkte verschiedener Sulfonierungsstufen. Die neuen sulfonierten Diphosphane der Formel (I) sind Feststoffe. Je nach Sulfonierungsbedingungen enthalten sie bis zu 6 Sulfonsäuregruppen. Die Alkalisalze sind in Wasser löslich, ihre Löslichkeit steigt mit dem Sulfonierungsgrad an.

Durch Behandlung wäßriger Alkalisalzlösungen der sulfonierten Diphosphane mit einem Kationenaustauscher in der H⁺-Form können die freien Säuren hergestellt werden. Aus den Säuren lassen sich durch Umsetzung mit Basen, beispielsweise Hydroxiden, Carbonaten, Ammoniak oder Aminen weitere Salze der neuen sulfonierten Diphosphane gewinnen.

Die neuen Verbindungen der Formel (I) haben sich besonders gut als Komponente von Katalysatoren für die Reduktion von aromatischen Nitrogruppen bewährt. Diese Umsetzung ist Gegenstand einer am gleichen Tag wie die vorliegende Erfindung eingereichten deutschen Patentanmeldung (Offenlegungsschrift Nr. 195 06 278). Wie aus den in dieser Anmeldung enthaltenen Beispielen 5a, 5b und 5c hervorgeht, führen die Verbindungen der Formel (I) (siehe Beispiel 5c) zu signifikant höheren Ausbeuten als bekannte wasserlösliche Phosphane (Beispiele 5a und 5b).

Es ist nicht erforderlich die sulfonierten Diphosphane als einheitliche Verbindungen einzusetzen. Es lassen sich auch unterschiedliche Sulfonierungsstufen der Diphosphane und/oder Sulfonat-Gemische mit verschiedenen Kationen verwenden.

Die nachfolgenden Beispiele belegen die Erfindung, ohne sie zu beschränken. Experimenteller Teil

### Beispiel 1

2,0 g (3,02 mMol) 2-(Diphenylphosphinomethyl)-2'-(dicyclohexylphosphinomethyl)-1,1'-binaphthyl * hergestellt gemäß Beispiel 2 der nicht vorveröffentlichten deutschen Patentanmeldung (Aktenzeichen P 44 34 844.4). * werden bei 0 bis 10°C in 7 ml 96 %iger Schwefelsäure gelöst, unter Einhaltung einer Temperatur von 3 bis 7°C mit 12,5 ml 65 %igem Oleum versetzt und darauf 22 Stunden bei Raumtemperatur gerührt: Anschließend werden innerhalb von ca. 30 min. bei 0 bis 5°C 82 ml Wasser zu dem Sulfonierungsgemisch zugetropft.
Zur Abtrennung des Sulfonierungsproduktes aus der wäßrigen Phase extrahiert man 2 Stunden bei Raumtemperatur mit einer Lösung von 10,5 ml Triisooctylamin in 40 ml Toluol. Die wäßrige Phase wird abgetrennt und verworfen. Anschließend extrahiert man die organische Phase bei Raumtemperatur durch Zugabe von 3 Gew.-%iger Natronlauge in drei Schritten. Bei einem pH-Wert von 1,1 bis 3,8 fallen 30 ml einer wäßrigen Phase (Reextrakt 1, enthaltend Sulfat) an. Im pH-Bereich 3,8 bis 6 fallen 30 ml einer wäßrigen Phase (Reextrakt 2) an. Im Bereich von pH 6 bis 12,5 wird die Wertproduktfraktion abgetrennt, wobei 25 ml einer wäßrigen Lösung (Reextrakt 3) gewonnen werden.
* hergestellt gemäß Beispiel 2 der nicht vorveröffentlichten deutschen Patentanmeldung (Aktenzeichen P 44 34 844.4).

### Analytische Kenngrößen der Reextrakte 2 und 3:

### Reextrakt 2:

³¹P-NMR-Spektrum (H₂O, pH 3,6 bis 6)
δ³¹P [P(Ar)₂P] (III): -11,4; -10,1; -9,2 ppm (48 %)
δ³¹P [P(O)(cyclohexyl)₂]P(V): +23,1; +25,2 (47 %)

### Reextrakt 3:

³¹P-NMR-Spektrum (H₂O, pH 6 bis 12,5)
δ³¹P [P(Ar)₂] P(III): -11,3; -10,5; -10,1; -9,4 ppm (48 %)
δ³¹ P[P(cyclohexyl)₂] P(III): +3,6; +4,2; +4,5; +4,9 ppm (51 %)

### Beispiel 2

2,0 g (3,02 mMol) 2-(Diphenylphosphinomethyl)-2'-(dicyclohexylphosphinomethyl)-1,1'-binaphthyl werden analog Beispiel 1 umgesetzt, wobei 25 ml einer wäßrigen Lösung (Reextrakt 3) gewonnen werden. Diese im Bereich von pH 6 bis 12,5 abgetrennte, die Wertproduktfraktion enthaltende wäßrige Lösung (Reextrakt 3) wird bei 1,33 Pa (10⁻²Torr)/80°C auf 10 ml eingeengt. Anschließend werden 80 ml Aceton zugesetzt, wobei ein braunes Öl erhalten wird. Die überstehende Lösung wird abdekantiert, der Rückstand in einer geringen Menge Methanol (ca. 3 ml) gelöst und durch Zusatz von 30 ml Ethanol erneut gefällt. Der erhaltene Feststoff wird abfiltriert und nacheinander mit Ethanol, Aceton und Petrolether (40 bis 60°C, tiefsiedend) gewaschen und getrocknet. Auf diese Weise erhält man ein braunes Pulver.
Ausbeute: 780 mg
Schmelzpunkt: > 230°C
¹H-NMR-Spektrum: (D₂O)
δ = 0,43-1,87 (m, cycloaliphaten-H); 2,25-2,87 (m-C**H**₂-P(cyclohexyl)₂), 3,43-3,84 (m, -C**H**₂-P(Ar)₂); 7,0-8,85 (m, aryl-H).
³¹P-NMR-Spektrum: (D₂O)
δ³¹P [P(Ar)₂]P(III): -11,9; -11,2; -10,2; -9,6 ppm (48 %)
δ³¹P [P(cyclohexyl)₂] P(III): +3,6; +3,9, +4,3; +4,6 ppm (47 %)

### Massenspektrum:

M⁺ = 947 (20 %), 969 (20 %), 1027 (60 %), 1049 (100 %), 1071 (50 %), 1142 (20 %), 1151 (20 %), 1173 (10 %)

### Beispiel 3

2,0 g (3,02 mMol) 2-(Diphenylphosphinomethyl)-2'-(dicyclohexylphosphinomethyl)-1,1'-binaphthyl werden analog Beispiel 1 umgesetzt. Die Reaktionszeit beträgt 22 Stunden. Zur Abtrennung des Sulfonierungsproduktes aus der wäßrigen Phase extrahiert man 1 Stunde bei Raumtemperatur mit einer Lösung von 26,3 ml Triisooctylamin in 100 ml Toluol. Die wäßrige Phase wird verworfen. Anschließend extrahiert man die organische Phase bei Raumtemperatur durch Zugabe von 3 Gew.-%iger Natronlauge in drei Schritten. Bis zu einem pH-Wert von 3 fallen 30 ml einer wäßrigen Phase (Reextrakt, 1, Sulfat) an. Im pH-Bereich von 3 bis 6 fallen 55 ml einer wäßrigen Phase (Reextrakt 2) an. Im Bereich von pH 6 bis 13 wird das Wertprodukt abgetrennt, wobei 40 ml einer wäßrigen Lösung (Reextrakt 3), gewonnen werden.

### Analytische Kenngrößen der Reextrakte 2 und 3:

### Reextrakt 2:

³¹P-NMR-Spektrum (H₂O, pH 3 bis 6)
δ³¹P [P(Ar)₂] P (III): -10,0 ppm (20 %)
δ³¹P [P(O)(Ar)₂] + [P(O)(cyclohexyl)₂] P(V): +25, +34, +57 ppm (80 %)
Gesamtgehalt: 3,1 g
Schmelzpunkt: > 230°C
Reextrakt 3: (Wertprodukt)
³¹P-NMR-Spektrum (H₂O, pH 6 bis 13)
δ³¹P [P(Ar₂)] P(III): -11,4; -9,5; -9,0 ppm (48 % d. Intensität)
δ³¹P [P(cyclohexyl)₂] P(III): +3,8; +4,3; +4,9 ppm (47 % d. Intensität)
Gesamtgehalt: 4,8 g
Schmelzpunkt: > 230°C
Massenspektrum:
M⁺ = 969 (25 %), 1049 (60 %), 1071 (100 %), 1093 (80 %), 1173 (20 %).

### Elementaranalyse:

13,0 Gew.-% Schwefel; 5,2 Gew.-% Phosphor; 9,1 Gew.-% Natrium
Daraus errechnen sich folgende molare Verhältnisse:
P:S = 1:2,5; P:Na = 1:2,5; S:Na = 1:1;
entsprechend einer Einführung von fünf SO₃H-Gruppen in das 2-(Diphenylphosphinomethyl)-2'-(dicyclohexylphosphinomethyl)-1,1'-binaphthalin-Molekül.

### Beispiel 4

15,0 g (22,6 mMol) 2-(Diphenylphosphinomethyl)-2'-(dicyclohexylphosphinomethyl)-1,1'-binaphthyl werden bei 0 bis 10°C in 72,7 g 96 %iger Schwefelsäure gelöst, unter Einhaltung einer Temperatur von 3 bis 7°C mit 145,9 g 65 %igem Oleum versetzt und darauf 48 Stunden bei Raumtemperatur gerührt. Zur Hydrolyse wird das Sulfonierungsgemisch unterhalb von 10°C in 400 ml Wasser eingetropft.
Zur Abtrennung des Sulfonierungsproduktes aus der wäßrigen Phase extrahiert man 1 Stunde bei 40°C mit einer Lösung von 57,6 g Triisooctylamin in 150 ml Toluol. Anschließend extrahiert man die organische Phase bei Raumtemperatur durch Zugabe von 3 Gew.-%iger Natronlauge in drei Schritten. Bis zu einem pH-Wert von 3 fallen 300 ml einer wäßrigen Phase (Reextrakt 1) an. Diese Fraktion besteht zum Großteil aus Sulfat und kann verworfen werden. Im pH-Bereich von 3 bis 6 fallen 100 ml einer wäßrigen Phase (Reextrakt 2) an. Im Bereich von pH 6 bis 12 wird das Wertprodukt abgetrennt, wobei 70 ml einer wäßrigen Lösung (Reextrakt 3) gewonnen werden.

### Analytische Kenngrößen der Reextrakte 2 und 3:

### Reextrakt 2:

³¹P-NMR-Spektrum (H₂O, pH 3 bis 6)
δ³¹P [PAr₂] P(III): -12,3; -11,8; -9,7; -8,9 ppm (35 %)
δ³¹P [P(O)Ar₂] + [PO(Cyclohexyl)₂] P(V): +20,2; +57,8 ppm (56 %)
Gesamtgehalt: 6,9 g
Schmelzpunkt: > 230°C

### Reextrakt 3:

³¹P-NMR-Spektrum (H₂O; pH 6 bis 12)
δ³¹P [P(Ar)₂] P(III): -11,8; -11,6; -11,0; -10,9; -10,4; -9.1 (47 %)
δ³¹P [P(cyclohexyl)₂] P(III): +3,7; +4,0; +4,2; +4,9; +5,7 (48 %)
Gesamtgehalt: 11,2 g
Schmelzpunkt: > 230°C
¹H-NMR-Spektrum: (D₂O)
δ = 0,43-1,88 (m, Cycloaliphaten); 2,58-2,82 (m, -C**H**₂-P(cyclohexyl)₂); 3,35-3,70 (m, -C**H**₂-P(Ar)₂; 6,76-8,94 (m, aryl-H).
³¹P-NMR-Spektrum: (D₂O)
³¹P[P(Ar)₂] P(III): -11,7; -11,3; -10,7; -10,3; -9,3 ppm (48 %)
δ³¹P[P(cyclohexyl)₂] P(III): +3,7; +4,3; +4,6 ppm (48 %)

### Massenspektrum:

M⁺ = 923 (50 %); 945 (50 %); 1003 (80 %), 1025 (100 %)

### Elementaranalyse:

12,4 Gew.-% Schwefel; 4,3 Gew.-% Phosphor; 9,9 Gew.-% Natrium daraus errechnen sich folgende molare Verhältnisse:
P:S = 1:3 P:Na = 1:3 S:Na = 1:1 entsprechend einer Einführung von sechs SO₃H-Gruppen in das 2-(Diphenylphosphinomethyl)-2'-(dicyclohexylphosphinomethyl)-1,1'-binaphthalin-Molekül.

### Beispiel 5

2,28 g (3,4 mMol) 2-(Diphenylphosphinomethyl)-2'-(dicyclohexylphosphinomethyl)-1,1'-binaphthyl werden bei 0 bis 10°C in 8 ml 96 %iger Schwefelsäure gelöst, unter Einhaltung einer Temperatur von 3 bis 7°C mit 14,3 ml 65 %igem Oleum versetzt und darauf 2 Stunden bei Raumtemperatur gerührt. Anschließend wird das Sulfonierungsgemisch zu 94 ml Wasser (O₂-frei) unterhalb von 10°C innerhalb von 30 min zugetropft. Zur Abtrennung des Sulfonierungsproduktes aus der wäßrigen Phase extrahiert man 1 Stunde bei Raumtemperatur mit einer Lösung von 12 ml Triisooctylamin (TIOA) in 47 ml Toluol. Die wäßrige Phase wird verworfen. Anschließend extrahiert man die organische Phase bei Raumtemperatur durch Zugabe von 3 Gew.-%iger Natronlauge in zwei Stufen. Bis zu einem pH-Wert von 3 fallen 50 ml einer wäßrigen Phase (Reextrakt 1, Sulfat) an. Im pH-Bereich von 3 bis 7 fallen 34 ml einer wäßrigen Phase (Reextrakt 2, Wertprodukt) an.
Das Reextrakt 3 entfällt.

### Analytische Kenngröße des Reextraktes 2:

Gesamtgehalt: 1,40 g
Schmelzpunkt: > 230°C
Massenspektrum:
M⁺ = 925 (40 %), 947 (50 %), 969 (40 %), 1003 (30 %), 1027 (60 %), 1049 (80 %), 1071 (40 %)
¹H-NMR-Spektrum (D₂O)
δ = 0,35-1,94 (m, Cycloaliphaten); 2,35-2,70 (m, -C**H**₂-P(cyclohexyl)₂; 3,40-3,58 (m, -C**H**₂-P(Ar)₂); 6,82-8,88 (m, aryl-H).
³¹P-NMR-Spektrum: (D₂O)
δ³¹P[P(Ar)₂] P(III): -11,5; -10,5; -9,50; ppm (45 %)
δ³¹P[P(cyclohexyl)₂] P(III): +2,0; +6,5 ppm (42 %)

### Beispiel 6

Man arbeitet wie in Beispiel 5 beschrieben. Die Reaktionszeit beträgt jedoch 7 Stunden. Bis zu einem pH-Wert von 3 fallen 60 ml einer wäßrigen Phase (Reextrakt 1, Sulfat) an. Im pH-Bereich 3 bis 7 fallen 35 ml einer wäßrigen Phase (Reextrakt 2, Wertprodukt) an. Das Reextrakt 3 entfällt.

### Analytische Kenngrößen des Reextraktes 2:

³¹P-NMR-Spektrum (H₂O); pH 3 bis 7)
δ³¹P[P(Ar)₂] P(III): -11,5; -10,5; -9,50; ppm (45 %)
δ³¹P[P(cyclohexyl)₂] P(III): +2,0; +6,5 ppm (42 %)
Gesamtgehalt: 2,0 g
Schmelzpunkt: > 230°C

### Massenspektrum:

M⁺ = 925 (40 %); 947 (60 %), 969 (65 %), 991 (20 %), 1003 (20 %), 1031 (60 %), 1049 (100 %); 1071 (80 %), 1093 (20 %)

### Beispiel 7

Man arbeitet wie in Beispiel 5 beschrieben. Die Reaktionszeit beträgt jedoch 72 Stunden. Bis zu einem pH von 3 fallen 75 ml einer wäßrigen Phase (Reextrakt 1, Sulfat) an. Im pH-Bereich 3 bis 5,5 fallen 17 ml einer wäßrigen Phase (Reextrakt 2) an. Im pH-Bereich von 5,5 bis 12 wird das Wertprodukt abgetrennt, wobei 33 ml einer wäßrigen Lösung (Reextrakt 3) gewonnen werden.

### Analytische Kenngrößen der Reextrakte 2 und 3:

### Reextrakt 2:

³¹P-NMR-Spektrum (H₂O, pH 3 bis 5,5)
δ³¹P P(III): -12,0; -11,6; -9,6 ppm (35 %)
δ³¹P P(V): +33,2; +57,2 ppm (56 %)
Gesamtgehalt: 1,10 g
Schmelzpunkt: > 230°C

### Reextrakt 3:

¹H-NMR-Spektrum: (D₂O)
δ = 0,41-1,88 (m, Cycloaliphaten); 2,23-2,64 (m, -C**H**₂-P(cyclohexyl)₂; 3,35-3,76 (m, -C**H**₂-P(Ar)₂; 6,82-8,88 (m, aryl-H).
³¹P-NMR-Spektrum: (D₂O)
δ³¹P[P(Ar)₂ P(III): -11,6; -10,4; -9,2; -8,4 ppm (40 %)
δ³¹P[P(cyclohexyl)₂] P(III): +4,0; +4,4; +5,2 ppm (32 %)
Gesamtgehalt: 1,75 g
Schmelzpunkt: > 230°C

### Massenspektrum:

M⁺ = 961 (40 %), 1003 (60 %); 1025 (100 %)

## Patentansprüche

1. Sulfonierte Diphosphane der allgemeinen Formel (I) 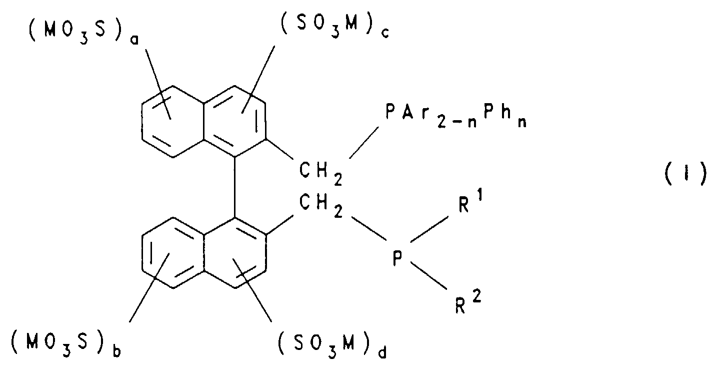 worin M für Wasserstoff, Ammonium, ein einwertiges Metall oder das Äquivalent eines mehrwertigen Metalls steht, a, b, c und d jeweils 0 oder 1 ist, mit der Maßgabe, daß a + b + c + d einer ganzen Zahl von 1 bis 4 entspricht, Ar für einen m-(MSO₃)-C₆H₄-Rest steht und M die vorstehende Bedeutung hat, n für 0, 1 oder 2, Ph für einen Phenylrest steht, R¹ und R² gleich oder verschieden sind und für einen Alkylrest mit 1 bis 10 Kohlenstoffatomen oder einen cycloaliphatischen Rest mit 5 bis 10 Kohlenstoffatomen im Ring stehen.

2. Sulfonierte Diphosphane nach Anspruch 1, dadurch gekennzeichnet, daß M für Wasserstoff oder ein Alkalimetallion steht.

3. Sulfonierte Diphosphane nach Anspruch 1 oder 2, dadurch gekennzeichnet, daß M für Wasserstoff, Na⁺ oder K⁺ steht.

4. Sulfonierte Diphosphane nach einem oder mehreren der Ansprüche 1 bis 3, dadurch gekennzeichnet, daß M für Na⁺ steht.

5. Sulfonierte Diphosphane nach einem oder mehreren der Ansprüche 1 bis 4, dadurch gekennzeichnet, daß a + b + c + d einer ganzen Zahl von 2 bis 4 entspricht.

6. Sulfonierte Diphosphane nach einem oder mehreren der Ansprüche 1 bis 5, dadurch gekennzeichnet, daß n für 0 oder 1 steht.

7. Sulfonierte Diphosphane nach einem oder mehreren der Ansprüche 1 bis 5, dadurch gekennzeichnet, daß n für 2 steht.

8. Sulfonierte Diphosphane nach einem oder mehreren der Ansprüche 1 bis 7, dadurch gekennzeichnet, daß R¹ und R² für einen Alkylrest mit 1 bis 6 Kohlenstoffatomen stehen.

9. Sulfonierte Diphosphane nach einem oder mehreren der Ansprüche 1 bis 8, dadurch gekennzeichnet, daß R¹ und R² für einen cycloaliphatischen Rest mit 5 bis 6 Kohlenstoffatomen im Ring stehen.

10. Verfahren zur Herstellung der sulfonierten Diphosphane nach einem oder mehreren der Ansprüche 1 bis 9, dadurch gekennzeichnet, daß man ein Diphosphan der allgemeinen Formel (II) 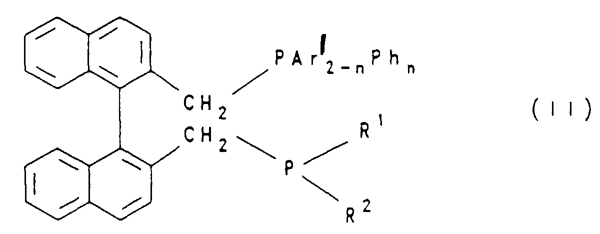 worin n, Ph, R¹ und R² die voranstehend genannten Bedeutung haben und Ar' ein C₆H₅-Rest, ist bei Temperaturen von 0 bis 25°C mit Oleum sulfoniert, das Sulfonierungsgemisch hydrolysiert und aus dem hydrolysierten Sulfonierungsgemisch die sulfonierten Diphosphane der allgemeinen Formel (I) isoliert.

11. Verfahren nach Anspruch 10, dadurch gekennzeichnet, daß man ein Diphosphan der Formel (II), worin n gleich 2 ist, einsetzt.

12. Verfahren nach einem oder mehreren der Ansprüche 10 bis 11, dadurch gekennzeichnet, daß man zur Sulfonierung Oleum einsetzt, das 10 bis 65, insbesondere 40 bis 65 Gew.-% freies Schwefeltrioxid enthält.

13. Verfahren nach einem oder mehreren der Ansprüche 10 bis 12, dadurch gekennzeichnet, daß man je mol Diphosphan der Formel (II) 25 bis 80, insbesondere 40 bis 70 mol Schwefeltrioxid einsetzt.

14. Verfahren nach einem oder mehreren der Ansprüche 10 bis 13, dadurch gekennzeichnet, daß man die Sulfonierung bei Temperaturen von 0 bis 20°C, insbesondere 0 bis 10°C durchführt.

15. Verfahren nach einem oder mehreren der Ansprüche 10 bis 14, dadurch gekennzeichnet, daß man die Hydrolyse des Sulfonierungsgemisches bei Temperaturen bis etwa 30°C, vorzugsweise von 0 bis 25°C vornimmt.

16. Verfahren nach einem oder mehreren der Ansprüche 10 bis 15, dadurch gekennzeichnet, daß man das hydrolysierte Sulfonierungsgemisch mit Alkalicarbonat oder Alkalihydroxid neutralisiert, Alkalisulfat abtrennt, die wäßrige Lösung einengt und die sulfonierten Diphosphane der Formel (I) aus dem Rückstand mit einem Gemisch aus Alkoholen mit bis zu 5 Kohlenstoffatomen im Molekül und Wasser extrahiert.

17. Verfahren nach einem oder mehreren der Ansprüche 10 bis 16, dadurch gekennzeichnet, daß man das hydrolysierte Sulfonierungsgemisch mit einer Mischung aus einem in Wasser unlöslichen Amin und einem organischen Lösungsmittel, insbesondere einer Mischung aus Triisooctylamin und Toluol umsetzt, die Sulfonate als Aminsalze extrahiert und die Lösung der Aminsalze mit der Lösung einer Base, vorzugsweise Natriumhydroxid oder Kaliumhydroxid in Wasser, gegebenenfalls in Anteilen, versetzt.

## Claims

1. Sulfonated diphosphanes of the formula (I) 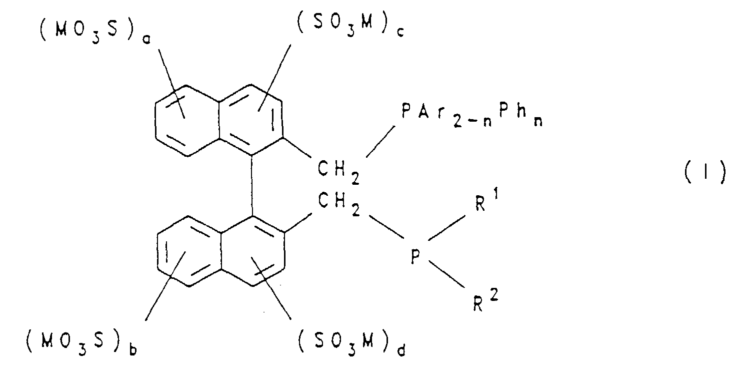 where M stands for hydrogen, ammonium, a monovalent metal or the equivalent of a monovalent metal, a, b, c and d are each 0 or 1 subject to the proviso that a + b + c + d equals an integer from 1 to 4, Ar stands for an m-(MSO₃)-C₆H₄ radical and M has the aforementioned meaning, n stands for 0, 1 or 2, Ph for a phenyl radical, R¹ and R² are the same or different and stand for an alkyl radical having 1 to 10 carbon atoms or a cycloaliphatic radical having 5 to 10 carbon atoms in the ring.

2. Sulfonated diphosphanes according to claim 1, characterised in that M stands for hydrogen or an alkali metal ion.

3. Sulfonated diphosphanes according to claim 1 or 2, characterised in that M stands for hydrogen, Na⁺ or K⁺.

4. Sulfonated diphosphanes according to one or more of claims 1 to 3, characterised in that M stands for Na⁺.

5. Sulfonated diphosphanes according to one or more of claims 1 to 4, characterised in that a + b + c + d equals an integer from 2 to 4.

6. Sulfonated diphosphanes according to one or more of claims 1 to 5, characterised in that n stands for 0 or 1.

7. Sulfonated diphosphanes according to one or more of claims 1 to 5. characterised in that n stands for 2.

8. Sulfonated diphosphanes according to one or more of claims 1 to 7, characterised in that R¹ and R² stand for an alkyl radical having 1 to 6 carbon atoms.

9. Sulfonated diphosphanes according to one or more of claims 1 to 8, characterised in that R¹ and R² stand for an cycloaliphatic radical having 5 to 6 carbon atoms in the ring.

10. A process for preparing sulfonated diphosphanes according to one or more of claims 1 to 9, characterised in that a disphosphane of the formula (II) 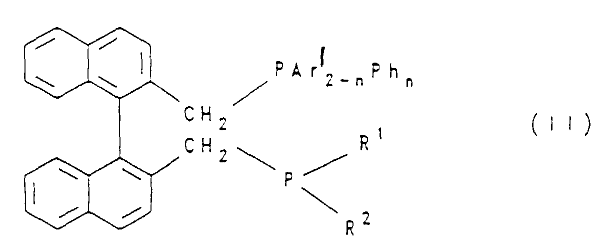 where n, Ph, R¹ and R² have the aforementioned meaning and Ar¹ is a C₆H₅ radical, is sulfonated at temperatures of 0 to 25°C with oleum, the sulfonation mixture is hydrolysed and the sulfonated diposphanes of the formula (I) are isolated from the hydrolysed sulfonation mixture.

11. The process according to claim 10. characterised in that a disphosphane of the formula (II) where n equals 2 is used.

12. The process according to one of or both claims 10 and 11, characterised in that oleum containing 10 to 65, in particular 40 to 65 wt. %, free sulfur trioxide is used for sulfonation.

13. The process according to one or more of claims 10 to 12, characterised in that 25 to 80, in particular 40 to 70 mol of sulfur trioxide is used per mole of diphosphane of the formula (II).

14. The process according to one or more of claims 10 to 13, characterised in that the sulfonation is performed at temperatures of 0 to 20°C, in particular 0 to 10°C.

15. The process according to one or more of claims 10 to 14, characterised in that the hydrolysis of the sulfonation mixture is performed at temperatures of approx. 30°C, preferably 0 to 25°C.

16. The process according to one or more of claims 10 to 15, characterised in that the hydrolysed sulfonation mixture is neutralised with alkali metal carbonate or alkali metal hydroxide, the alkali metal sulfate is separated, the aqueous solution concentrated by evaporation and the sulfonated diphosphanes of the formula (I) extracted from the residue with a mixture of alcohols having up to 5 carbon atoms in the molecule and water.

17. The process according to one or more of claims 10 to 16, characterised in that the hydrolysed sulfonation mixture is reacted with a mixture of a water-insoluble amine and an organic solvent, in particular a mixture of triisooctylamine and toluene, the sulfonates are extracted as amine salts and the solution of the amine salts is mixed with the solution of a base, preferably sodium hydroxide or potassium hydroxide in water, optionally in portions.

## Revendications

1. Diphosphanes sulfonés de formule générale (I) 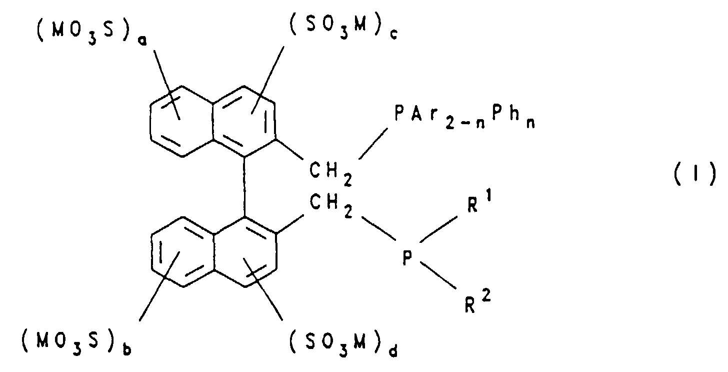 dans laquelle M représente un atome d'hydrogène, un ammonium, un métal monovalent ou l'équivalent d'un métal polyvalent, a, b, c et d sont chacun 0 ou 1, à condition que a + b + c + d corresponde à un nombre entier de 1 à 4, Ar représente un reste m-(MSO₃)-C₆H₄ et M a la signification précédente, n est 0, 1 ou 2, Ph représente un reste phényle, R¹ et R² sont identiques ou différents et représentent un reste alkyle de 1 à 10 atomes de carbone ou un reste cycloaliphatique de 5 à 10 atomes de carbone cycliques.

2. Diphosphanes sulfonés selon la revendication 1, caractérisés en ce que M représente un atome d'hydrogène ou un ion de métal alcalin.

3. Diphosphanes sulfonés selon la revendication 1 ou 2, caractérisés en ce que M représente un atome d'hydrogène, Na⁺ ou K⁺.

4. Diphosphanes sulfonés selon l'une ou plusieurs des revendications 1 à 3, caractérisés en ce que M représente Na⁺.

5. Diphosphanes sulfonés selon l'une ou plusieurs des revendications 1 à 4, caractérisés en ce que a + b + c + d correspond à un nombre entier de 2 à 4.

6. Diphosphanes sulfonés selon l'une ou plusieurs des revendications 1 à 5, caractérisés en ce que n est 0 ou 1.

7. Diphosphanes sulfonés selon l'une ou plusieurs des revendications 1 à 5, caractérisés en ce que n est 2.

8. Diphosphanes sulfonés selon l'une ou plusieurs des revendications 1 à 7, caractérisés en ce que R¹ et R² représentent un reste alkyle de 1 à 6 atomes de carbone.

9. Diphosphanes sulfonés selon l'une ou plusieurs des revendications 1 à 8, caractérisés en ce que R¹ et R² représentent un reste cycloaliphatique ayant 5 à 6 atomes de carbone cycliques.

10. Procédé de préparation des diphosphanes sulfonés selon l'une ou plusieurs des revendications 1 à 9, caractérisé en ce que l'on soumet un diphosphane de formule générale (II) 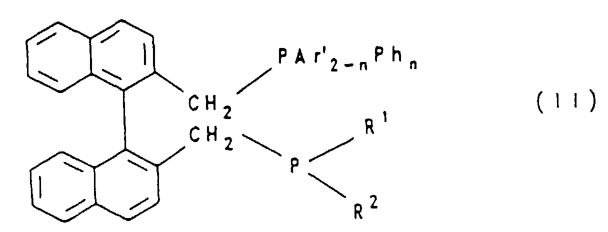 dans laquelle n, Ph, R¹ et R² ont la signification indiquée précédemment et Ar' est un reste C₆H₅, à des températures de 0 à 25°C, à une sulfonation avec de l'oléum, on hydrolyse le mélange de sulfonation et on isole les diphosphanes sulfonés de formule générale (I) à partir du mélange de sulfonation hydrolysé.

11. Procédé selon la revendication 10, caractérisé en ce que l'on utilise un diphosphane de formule (II) dans lequel n est égal à 2.

12. Procédé selon l'une ou plusieurs des revendications 10 à 11, caractérisé en ce que l'on utilise pour la sulfonation un oléum qui contient 10 à 65, en particulier 40 à 65 % en masse de trioxyde de soufre libre.

13. Procédé selon l'une ou plusieurs des revendications 10 à 12, caractérisé en ce que l'on utilise, pour une mol de diphosphane de formule (II), 25 à 80, en particulier 40 à 70 mol de trioxyde de soufre.

14. Procédé selon l'une ou plusieurs des revendications 10 à 13, caractérisé en ce que l'on effectue la sulfonation à des températures de 0 à 20°C, en particulier de 0 à 10°C.

15. Procédé selon l'une ou plusieurs des revendications 10 à 14, caractérisé en ce que l'on effectue l'hydrolyse du mélange de sulfonation à des températures allant jusqu'à environ 30°C, de préférence de 0 à 25°C.

16. Procédé selon l'une ou plusieurs des revendications 10 à 15, caractérisé en ce que l'on neutralise le mélange de sulfonation hydrolysé avec un carbonate de métal alcalin ou un hydroxyde de métal alcalin, on sépare le sulfate de métal alcalin, on concentre la solution aqueuse et on extrait les diphosphanes sulfonés de formule (I) du résidu avec un mélange d'alcools ayant jusqu'à 5 atomes de carbone dans la molécule et d'eau.

17. Procédé selon l'une ou plusieurs des revendications 10 à 16, caractérisé en ce que l'on fait réagir le mélange de sulfonation hydrolysé avec un mélange d'une amine insoluble dans l'eau et d'un solvant organique, en particulier un mélange de triisooctylamine et de toluène, on extrait les sulfonates sous forme de sels d'amine et on ajoute une solution d'une base, de préférence d'hydroxyde de sodium ou d'hydroxyde de potassium dans de l'eau, éventuellement par portions, à la solution des sels d'amine.
